# EUROPÄISCHE PATENTSCHRIFT

(11) **EP 1 409 316 B1**
(45) Veröffentlichungstag und Bekanntmachung des Hinweises auf die Patenterteilung: **08.03.2017**
(21) Anmeldenummer: 02747326.3
(22) Anmeldetag: 28.05.2002
(51) Int. Cl.: B60T 8/36

(54) **VORRICHTUNG UND VERFAHREN ZUR ERFASSUNG VON BREMSDRÜCKEN**
DEVICE AND METHOD FOR DETECTING BRAKE PRESSURE
DISPOSITIF ET PROCEDE POUR DETECTER DES PRESSIONS DE FREINAGE

(30) Priorität: 12.07.2001 DE 10133293; 07.02.2002 DE 10205012
(43) Veröffentlichungstag der Anmeldung: 21.04.2004
(73) Patentinhaber: Continental Teves AG & Co. oHG, 60488 Frankfurt (DE)
(72) Erfinder: LOHBERG, Peter, 61381 Friedrichsdorf (DE); ZYDEK, Michael, 60529 Frankfurt/Main (DE)
(86) Internationale Anmeldenummer: PCT/EP2002/005838
(87) Internationale Veröffentlichungsnummer: WO 2003/006294

(56) Entgegenhaltungen:
- WO-A-00/30909
- WO-A-99/39171
- DE-A- 19 841 334
- DE-A- 19 917 941

## Beschreibung

Die Erfindung betrifft ein Verfahren zur Fehlerkompensation gemäß Oberbegriff von Anspruch 1 sowie eine elektrohydraulische Druckregelvorrichtung gemäß Oberbegriff von Anspruch 5, insbesondere in elektrohydraulischen Steuergeräten für elektronisch geregelte Bremsen (ABS, ASR, ESP etc.) für Kraftfahrzeuge.

Elektronisch regelnde Bremseinrichtungen sind bekannt (Bremsen Handbuch, "Elektronische Brems-Systeme", 1955 ,ISBN 3-89059-026-8). Sie bestehen aus dem Verbund einer hydraulischen Regeleinheit, welche auch als Ventilblock bezeichnet wird, und einem elektronischen Regler (ER). Die hydraulische Regeleinheit umfaßt ein Motor-Pumpen-Aggregat und einen daran angeflanschten Ventilblock. Das Motor-Pumpen-Aggregat stellt während der Bremsregelung das in der Druckaufbauphase benötigte, unter Druck stehende Flüssigkeitsvolumen zur Verfügung. Die in der hydraulischen Regeleinheit zusammengefaßten Ein- und Auslaßventile ermöglichen die Modulation der Radbremsdrücke. Am Ventilblock sind die Bremsleitungen zu den Radbremsen angeschlossen. Die hydraulischen Ventile im Ventilblock werden über elektromagnetische Spulen betätigt, welche innerhalb des elektronischen Reglergehäuses angeordnet sind. Zur Erkennung von Fahrzuständen werden dem elektronischen Regler unter anderem die Signale von vier Raddrehzahlsensoren zugeführt.

Weiterhin sind aus der nicht veröffentlichten älteren deutschen Patentanmeldung P 10122330.7 Steuergeräte mit integrierten Drucksensoren bekannt, bei denen zur Verbesserung der hydraulischen Druckregelung Drucksensoren zur Messung des Drucks in den Hydraulikleitungen vorgesehen sind.

In der WO 98/41831, der WO 00/17025 sowie der WO 99/30943 wird vorgeschlagen, mehrere Drucksensoren in eine gemeinsame Halterung zu fassen und diese Halterung mit der hydraulischen Regeleinheit zu verschrauben, wobei die Sensoren mit der hydraulischen Regeleinheit gleichzeitig hydraulisch verbunden werden. Bei markterhältlichen Drucksensoren sind aktive elektronische Schaltkreise zur Signalaufbereitung in das Drucksensorgehäuse integriert. Es wird aber auch vorgeschlagen, die Schaltkreise zur Signalaufbereitung auf den Haltern anzuordnen und eine Steckeranordnung zur Signalverbindung mit dem elektronischen Regler vorzusehen.

Aus der WO 00/030909 ist ein Ventilblock mit daran angeordnetem Drucksensorcluster sowie mit einer Hydraulikpumpe für eine Kraftfahrzeugbremsanlage bekannt. Die Drucksensoren stehen über Röhrenverbindungen in Kontakt mit dem jeweils in den Radbremsen und dem Hauptzylinder vorherrschenden Druck. Ein Schaltkreis zur Verarbeitung der Drucksensorsignale ist dabei Bestandteil des Drucksensorclusters. Über einen Stecker wird der mit dem Drucksensorcluster zu einem gemeinsamen Modul verbundene Ventilblock elektrisch mit einer elektronischen Kontrolleinheit verbunden. Die elektronische Kontrolleinheit überwacht die Drucksignale des Drucksensorclusters und steuert abhängig von diesen die Hydraulikpumpe und die Ventile im Ventilblock an.

Die Erfindung sieht vor, eine bekannte elektrohydraulische Druckregelvorrichtung gemäß Anspruch 5 weiterzubilden.

Gemäß der Erfindung werden zur sensorischen Abtastung eines Hydraulikkanals Druckmeßwandler bevorzugt in der Weise ausgebildet, daß auf deren Druckmeßmembran eine passive unkompensierte Dehnungsmeßbrücke aufgebracht ist, welche insbesondere mit einer entsprechenden Anzahl von Kontaktflächen zur Herstellung einer elektrischen Verbindung mit dem elektronischen Regler über Gegenkontakte verbunden ist. Die Verbindung über Gegenkontakte erfolgt nach der Erfindung bevorzugt unter Verzicht auf die gemäß dem Stand der Technik üblichen Integration einer aktiven elektronischen Schaltung zur Signalvorverstärkung, Signalaufbereitung und Fehlerkompensation der Meßbrücke.

Die Erfindung bezieht sich auch auf Bremseinrichtungen, die zusätzlich die Druckinformation einer oder mehrerer hydraulischer Verbindungen im Ventilblock auswerten.

Die Erfindung schlägt vor, die elektronische Signalaufbereitung für alle individuellen Druckmeßwandler der in der hydraulischen Regeleinheit vorhandenen Druckkanäle schaltungstechnisch als Teil eines integrierten Schaltkreises im elektronischen Regler zu realisieren. Es ist besonders zweckmäßig, genau einen integrierten Schaltkreis vorzusehen. Eine Vereinfachung wird aber auch bereits dann erzielt, wenn die Anzahl der integrierten Schaltkreise zahlenmäßig geringer gewählt ist, als die Anzahl der vorhanden Druckmeßwandler.

Erfindungsgemäß sind im elektronischen Regler Berechnungsmittel, insbesondere realisiert durch einen oder mehrere Mikrocomputer bzw. -controller, vorhanden, mit denen die Fehler der Meßkette jedes individuellen Druckkanals durch elektronische Auswertung zweier funktional separater Korrekturgrößenberechnungen oder Korrekturtabellen zumindest zu wesentlichen Teilen beseitigt werden können.

Bevorzugt erfolgt die Befestigung der Gehäusekörper der Druckmeßwandler an der hydraulischen Regeleinheit entweder über einen Befestigungsrahmen (z.B. eine gelochte Platte), unter Verwendung geeigneter Befestigungsmittel (z.B. eine oder mehrere Schrauben) oder ebenfalls bevorzugt in der Weise, daß die Gehäusekörper der Druckmeßwandler direkt an der hydraulischen Regeleinheit, insbesondere mittels ClinchVerbindungen, befestigt sind.

Die Erfindung betrifft weiterhin ein Verfahren zur Fehlerkompensation gemäß Anspruch 1.

Ein Druckmeßwandler bildet den an einer Meßmembran ermittelten Druck (Differenzdruck) auf ein elektrisches Signal ab (z.B. ohmscher Widerstand der Meßbrücke). Zur Interpretation des elektrischen Signals wird ein individueller Sensor zunächst geeicht bzw. kalibriert. Die Wertepaare, welche die elektrische Kenngröße der physikalische Druckgröße zuordnen, sind in der Regel abhängig von weiteren Umgebungsparametern, besonders von der Umgebungstemperatur. Es ist sinnvoll, zunächst eine geeignete Zuordnung zwischen Druckgröße und elektrischer Größe per Definition festzulegen und vorliegende Abweichungen des elektrischen Signalwertes von dem erwarteten Signalwert als Sollwertabweichung zu bezeichnen. Gemäß dem Verfahren nach der Erfindung werden die Sollwertabweichungen eines individuellen Druckmeßwandlers als Funktion von Druck und Temperatur und/oder die Sollwertabweichungen der dem individuellen Druckmeßwandler zugeordneten Signalaufbereitungsstufe insbesondere einschließlich des zugehörigen Analog/Digital-Wandlers als Funktion der Signaleingangsspannung und/oder der Temperatur über Stützstellenmessungen ermittelt und in dem elektronischen Regler individuell zugeordnet in Datenspeichern abgespeichert bereitgehalten.

Signalaufbereitungs-kanal/-kanäle (überwiegend "elektronische" Komponenten des/der Drucksensor-kanals/kanäle) ermittelt. Eine räumliche Trennung der obigen Korrekturwerteermittlung ist insbesondere dann sinnvoll, wenn die Fertigung der mechanischen und elektronischen Komponenten der erfindungsgemäßen Vorrichtung an verschiedenen Orten erfolgt.

Erfindungsgemäß wird zu einem späteren Zeitpunkt (nach der Ermittlung der Korrekturwerte, also bei einer Druckmessung) ein am Drucksensor ermittelter Meßwert unter Verwendung von zwei miteinander verknüpfter Korrekturwerte in einen korrigierten Druckmeßwert umgerechnet. Diese Umrechnung erfolgt zweckmäßigerweise für jeden Hydraulikkanal individuell, z.B. durch Anwendung von zwei oder mehreren Korrekturwertmatrizen.

Besonders vorteilhaft läßt sich die Vorrichtung und das Verfahren der vorliegenden Erfindung in elektrohydraulischen Bremssystemen (EHB) einsetzen.

Die erfindungsgemäße Lösung bietet unter anderem bei Anordnungen mit mehreren Druckmeßwandlern den Vorteil einer beträchtlichen Vereinfachung und Kostensenkung. Ursache hierfür ist im wesentlichen die Vereinfachung in der elektronischen Auswerteschaltung der Drucksensoren, welche mit einer geringeren Anzahl an elektronischen Bauelementen auskommt. Ein weiterer Vorteil besteht darin, daß auf bereits in der Massenproduktion erprobte mechanisch/hydraulische Konstruktionen zurückgegriffen werden kann. Für den Hersteller von entsprechenden Kraftfahrzeugkomponenten reduziert sich vorteilhafterweise der Kalibrieraufwand auf eine Vermessung der Fehlerkurve vor oder insbesondere nach dem Einbau der Komponente in das Kraftfahrzeug. Der Kraftfahrzeughersteller kann vorteilhafterweise den integrierten Schaltkreis und den Druckmeßwandler am Band miteinander zu einer baulichen Einheit zusammenfügen. Es ist ebenfalls möglich, eine Kalibrierung nach der Fertigstellung eines Steuergerätes aus Hydraulikeinheit und elektronischem Regler beim Hersteller des Bremssystems vorzunehmen. Ein wesentlicher Vorteil dabei ist, daß keine Kalibrierung bei dem Hersteller der Drucksensoren vorgenommen werden braucht.

Weitere bevorzugte Ausführungsformen ergeben sich aus den Unteransprüchen und der nachfolgenden Figurenbeschreibung.

Es zeigen
- Fig. 1: eine schematische Darstellung der Funktionselemente einer elektrohydraulischen Regeleinrichtung nach dem Stand der Technik,
- Fig. 2: ein vereinfacht dargestelltes monolithisches Bremsensteuergerät im Querschnitt nach dem Stand der Technik,
- Fig. 3: eine schematische Darstellung einer erfindungsgemäßen Vorrichtung zur Druckmessung in einem Steuergerät,
- Fig. 4: eine schematische, teilweise perspektivische Darstellung einer erfindungsgemäßen Drucksensorschnittstelle,.
- Fig. 5: eine weitere perspektivische Darstellung der erfindungsgemäßen Drucksensorschnittstelle und
- Fig. 6: einen Teilbereich eines Steuergeräts im Querschnitt mit einer Anordnung bestehend aus mehreren Drucksensoren.

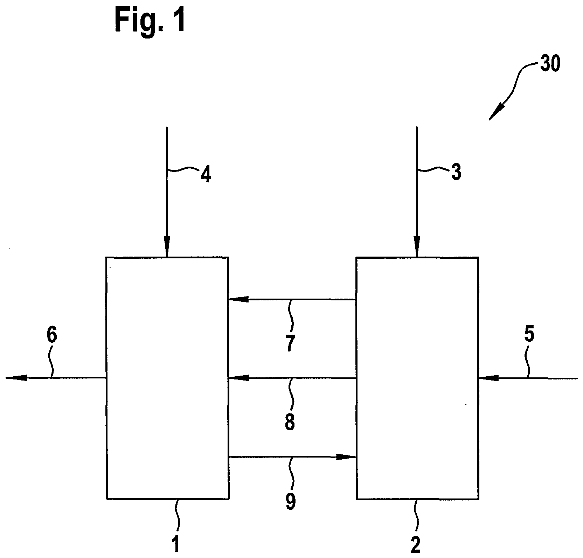

Fig. 1 zeigt schematisch die wesentlichen Funktionsblöcke einer an sich bekannte elektrohydraulischen Druckregelvorrichtung 30 (Steuergerät) zur Ansteuerung von hydraulisch betätigten Kraftfahrzeugbremsen. Druckregelvorrichtung 30 besteht aus einem Ventilblock 1 und einem elektronischen Regler 2. Ventilblock und elektronischer Regler bilden eine bauliche Einheit. Ventilblock und elektronischer Regler sind über eine elektrische und magnetische Schnittstelle 7,8,9 verbunden. Dem elektronischen Regler wird elektrische Energie 3, dem Ventilblock hydraulische Energie 4 zugeführt. Regler 2 werden außerdem weitere Sensorsignale 5 von externen Sensoren, wie z.B. Raddrehzahlsensoren, Gierratensensoren, Schalterzustände etc. zugeführt, mit denen der aktuelle Fahrzustand ermittelt werden kann. Ventilblock 1 leitet in Abhängigkeit von den Signalen der elektronischen Regelung druckmodulierte Bremsflüssigkeit 6 zu den Bremsen. Durch den monolithischen Aufbau der Vorrichtung 30 und dem Konstruktionsprinzip des an sich bekannten magnetischen Steckers mit zwei unabhängigen und trennbaren Einheiten ergeben sich die Verbund-Schnittstellen 7, 8, 9. Hierbei ist 7 eine elektrische Steckverbindung zur Energieversorgung des Pumpenmotors und 9 eine sensorische Schnittstelle zur Übertragung von Drucksignalen. 8 ist ein sogenannter "magnetischer Stecker", mit dem eine Ansteuerung der Hydraulikventile im Ventilblock magnetisch über Spulen erfolgt.

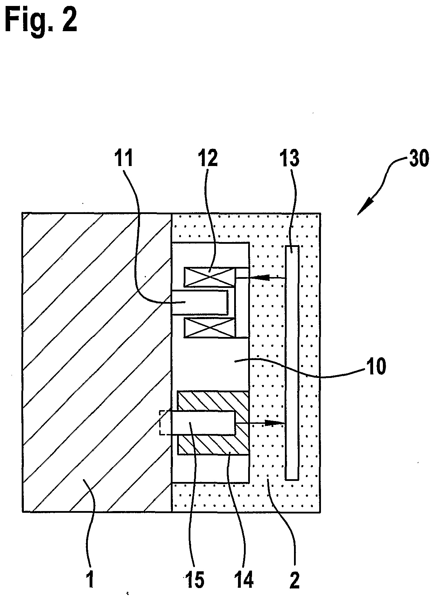

Fig. 2 zeigt das Konstruktionsschema der Bremsanlage bzw. des Bremsensteuergeräts 30. Elektronische Regler 2 ist mit einem im wesentlichen schalenförmigen Gehäuse umgeben, welches auf einer dem Ventilblock zugewandten Seite die Ventilspulen 12 zum Eingriff in Ventildome 11 aufnimmt. Im Verbund mit dem Ventilblock entsteht hierdurch Hohlraum 10, in welchem die Elemente der Schnittstellen 7, 8, 9 aus Fig. 1 durch Umwelteinflüsse geschützt untergebracht sind. Bei elektrischer Erregung von Ventilspule 12 wird magnetisch ein Anker in Ventildom 11 bewegt, so daß das im Ventilblock angeordnete, mit dem Ventildom verbundene Hydraulikventil betätigt wird. Dagegen bildet die mit Regler 2 verbundene Fassung 14 und der mit Ventilblock 1 verbundene Drucksensor 15 die sensorische Schnittstelle 9. Beim Zusammenstecken von elektronischem Regler und Ventilblock werden die Ventildome in entsprechende Bohrungen der Spulen eingeführt. Gleichzeitig entsteht eine elektrische Verbindung der sensorischen Schnittstelle 9 und der nichtgezeichneten elektrischen Verbindung 7 für den Pumpenmotor. In das Gehäuse des elektronischen Reglers eingebettet ist ein elektronischer Schaltungsträger 13, dem die elektrisch gewandelten Drucksignale zugeführt werden und welcher u.a. elektrische Signale zur Spulenerregung erzeugt.

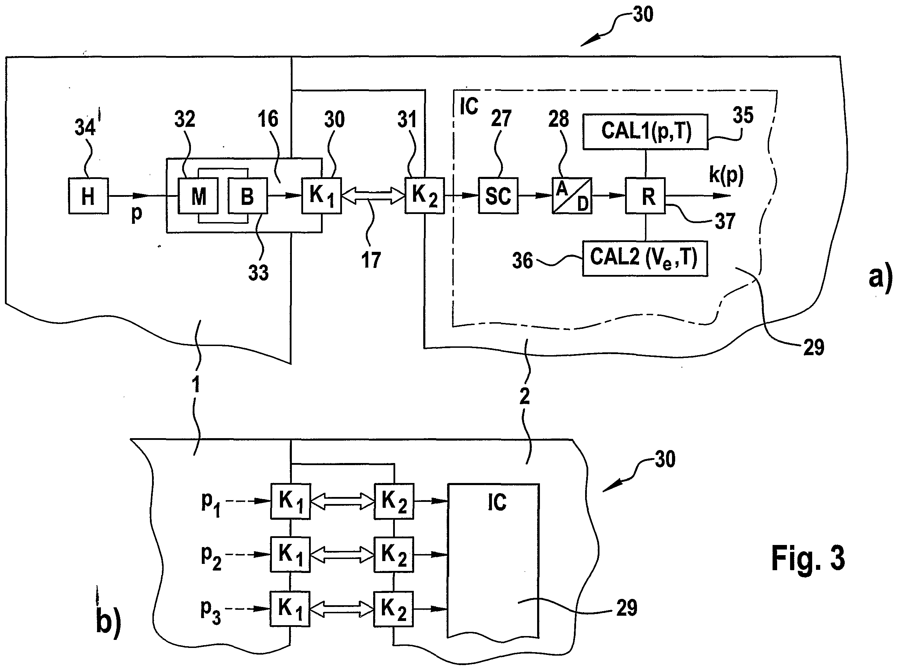

In Fig. 3a ist mittels Funktionsblöcken der Aufbau der erfindungsgemäßen Drucksensoranordnung am Beispiel eines einzelnen Sensors dargestellt. Zunächst wird der Druck in Hydraulikkanal 34 durch Druckmeßwandler 16 erfaßt. Druckmeßwandler 16 weist eine Druckmeßmembran 32 und eine darauf angebrachte, passive sowie unkompensierte Dehnungsmeßbrücke 33 auf. Weiterhin weist der Druckmeßwandler eine entsprechende Anzahl von Kontaktflächen 31 zur Herstellung einer elektrischen Verbindung 17 mit dem elektronischen Regler über Gegenkontakte 32 auf. In Druckmeßwandler 16 sind keine elektrisch aktiven Bauelemente (z.B. Verstärker) enthalten. Bei den Meßbrücken B handelt es sich um an sich bekannte piezoresistive Widerstände oder dehnbare Dünnschichtwiderstände, welche mit der Membran verbunden sind.

Teilbild b von Fig. 3 zeigt ein Beispiel für eine Drucksensoranordnung nach der Erfindung mit mehreren Drucksensoren, bei der die elektronische Signalaufbereitungsstufe 27 für alle individuellen Druckmeßwandler der Druckkanäle p1, p2, p3, ... usw. schaltungstechnisch als Teil eines integrierten Schaltkreises 29 im elektronischen Regler realisiert ist, welcher die aktiven Bauelemente der Einzelsensoren auf einem gemeinsamen Chip zusammenfaßt.

Wie in Teilbild a) dargestellt, wird bei der Messung in elektronischem Regler 2 eine Kalibrierung der elektrischen Signale des Sensors 16 durchgeführt. Jedes individuelle elektrische Drucksignal wird über Analog/Digital-Wandler 28 in ein Digitalsignal gewandelt. Am Eingang von A/D-Wandler 28 kann eine Signalaufbereitungsstufe 27 vorgesehen sein, welche gemeinsam mit dem A/D-Wandler einen Signalaufbereitungskanal umfaßt. Die elektronische Kalibrierung erfolgt programmgesteuert in einem Mikroprozessorsystem 37. Mikroprozessorsystem 37 führt ein Verfahren aus, durch welches die ermittelten Meßwerte mittels zweier funktional separater gespeicherter Korrekturgrößenberechnungen 35, 36 oder Korrekturtabellen berichtigt werden. Hierdurch werden zum einen die Sollwertabweichungen des individuellen Druckmeßwandlers als Funktion von Druck (p) und Temperatur (T) und zum anderen die Sollwertabweichungen der dem individuellen Druckmeßwandler zugeordneten Signalaufbereitungsstufe 27 einschließlich des zugehörigen Analog/Digital-Wandlers 28 als Funktion der Signaleingangsspannung Vₑ und der Temperatur T über Stützstellenmessungen ermittelt und in dem elektronischen Regler individuell zugeordnet in Datenspeichern 35 CAL1 (p,T) und 36 CAL2 (Vₑ,T) abgespeichert bereitgehalten. Mit jedem durch Sensor 16 bestimmten Meßwert ermittelt dann Mikroprozessorsystem 37 unter Verrechnung der beiden Korrekturwertanteile einen Zahlenwert k(p) als Maß für den Druck in dem individuellen Hydraulikkanal 34.

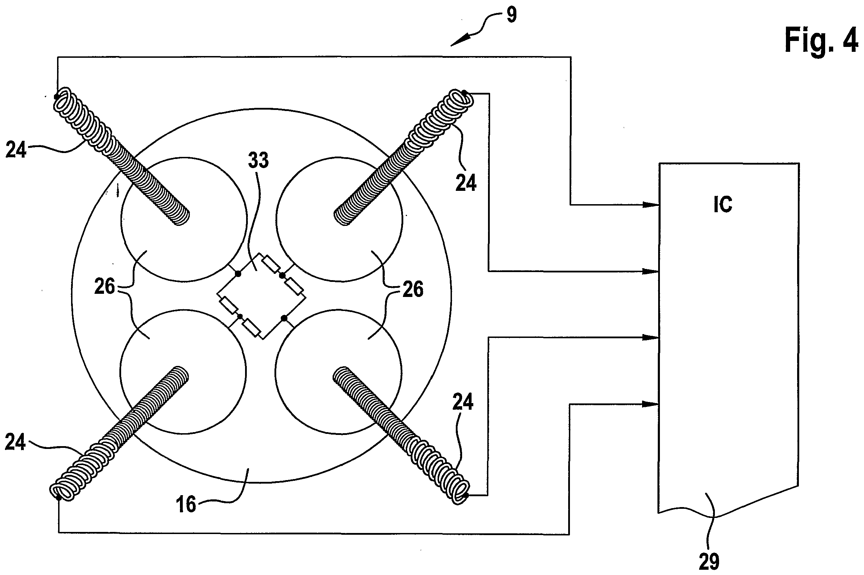

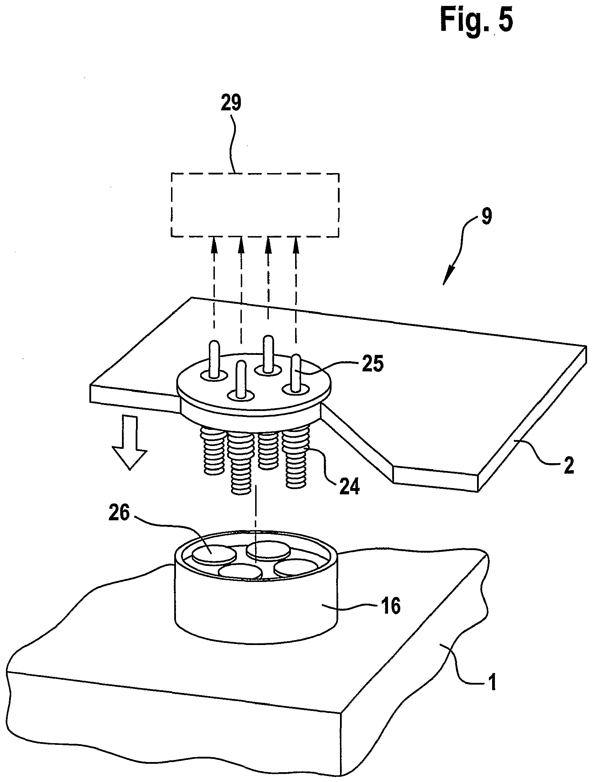

Die sensorische Schnittstelle wird in den Figuren 4 und 5 dargestellt. Auf der nichtgezeichneten Membran von Druckmeßwandler 16 ist Wheatstone-Brücke 33 befestigt, welche zur Druckbestimmung aus resistiven Dehnungsmeßstreifen zusammengesetzt ist. Eine Temperaturbestimmung kann entweder ebenfalls durch Messung des temperaturabhängigen Widerstands von Brücke 33 oder mittels eines zusätzlichen Temperatursensors erfolgen. Die Anschlüsse von Brücke 33 führen über metallische oder metallisierte Kontaktflächen 26, welche mit dem Gehäusekörper des Druckmeßwandlers 16 verbunden sind, zu integriertem Schaltkreis 29. Druckmeßwandler 16 ist in Ventilblock 1 eingefügt. An Reglergehäuse 2 sind Kontaktfedern 24 befestigt. Wenn Ventilblock 1 und das Gehäuse des elektronischen Reglers 2 zueinander geführt werden, wird eine elektrische Verbindung durch Aufsetzen von Kontaktfedern 24 auf Kontaktflächen 26 hergestellt (Schnittstelle 9).

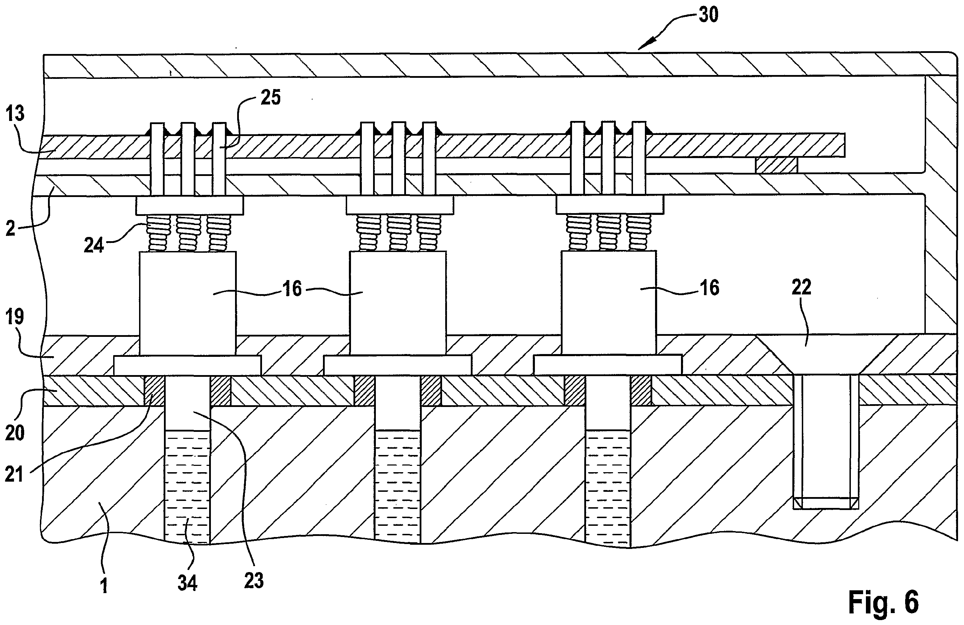

Fig. 6 zeigt ein Beispiel für die Befestigung der Gehäusekörper der Druckmeßwandler 16 über eine Platte 19 mit Schrauben 22 an Ventilblpck 1. Zwischen Platte 19 und Ventilblock 1 ist eine Dichtplatte 20 mit eingelassenen Dichtungen 21 eingefügt. An Druckmeßwandler 16 sind Steigrohre 23 befestigt, welche über individuelle Hydraulikkanäle 34 mit Hydraulikflüssigkeit beaufschlagt sind. Mit Gehäuse 2 des elektronischen Reglers sind Kontaktfedern 24 verbunden. Von Federn 24 bestehen elektrische Verbindungen, welche in entsprechende Bohrungen von Schaltungsträgerplatine 13 ragen und mit dieser verlötet oder durch an sich bekannt Einpreßkontakte leitfähig verbunden sind.

## Patentansprüche

1. Verfahren zur Fehlerkompensation, welches in einer Druckregelvorrichtung elektronisch ausgeführt wird, wobei bei einer Druckmessung aus den Druckkenngrößen der Drucksensoren fehlerkorrigierte Druckkenngrößen mittels einer numerischen Zuordnungsvorschrift berechnet werden, wobei bei der Berechnung zwei funktional unabhängige Korrekturwerte miteinander verknüpft werden, welche eine Temperaturabhängigkeit und Einflüsse des Signalaufbereitungskanals (27,28) berücksichtigen, **dadurch gekennzeichnet, dass** mindestens zwei räumlich getrennte Korrekturwerteermittlungen (35,36) an verschiedenen Fertigungsorten durchgeführt werden, wobei während der ersten Korrekturwerteermittlung (35) Korrekturwerte für einen individuellen Druckmesswandler (16) ermittelt werden und in einer weiteren Korrekturwerteermittlung (36) Korrekturwerte für einen oder mehrere Signalaufbereitungskanal/-kanäle (27,28) ermittelt werden.

2. Verfahren nach Anspruch 1, **dadurch gekennzeichnet, daß** die getrennt ermittelten Korrekturwerte in einer elektronischen Recheneinheit (37) miteinander verknüpft werden.

3. Verfahren nach Anspruch 2 oder 3, **dadurch gekennzeichnet, daß** die Korrekturwerte, die bei einer Korrekturwerteermittlung erhalten wurden, jeweils in einem eigenständigen Datenbereich oder Datenmedium gespeichert werden.

4. Verfahren nach mindestens einem der Ansprüche 1 bis 3, **dadurch gekennzeichnet, daß** in einer ersten Fehlermatrix (35) Korrekturwerte über die Sollwertabweichungen des Ausgangswertes als Funktion des Bremsdrucks und der dabei herrschenden Temperatur und in einer weiteren Fehlermatrix (36) die Korrekturwerte über die Sollwerteabweichungen des Ausgangswertes als Funktion der Signaleingangsspannung und der dabei herrschenden Temperatur gespeichert sind.

5. Elektrohydraulische Druckregelvorrichtung (30) mit integrierten Drucksensoren (16) zur Erfassung des Drucks eines Fluids in Druckleitungen (34), wobei die Vorrichtung aus einem Ventilblock (1) und einem elektronischen Regler (2) über einen magnetischen Stecker zu einer kompakten, abgedichteten baulichen Einheit mit einem Hohlraum (10) zusammengefügt sind, wobei in einem Hohlraum (10) mehrere Druckmesswandler (16) angeordnet sind, die jeweils eine Druckmessmembran (32) und einen elektrisch passiven Messwandler (33) enthalten, wobei der Ventilblock (1) keine Einrichtung zur Signalvorverstärkung, Signalaufbereitung und Fehlerkompensation des elektrischen Wandlersignals umfasst, **dadurch gekennzeichnet, dass** in dem elektronischen Regler (2) Berechnungsmittel vorhanden sind, mit denen die Fehler der Messkette jedes individuellen Druckkanals bei einer Druckmessung durch elektronische Auswertung zweier funktional separater Korrekturgrößenberechnungen oder Korrekturtabellen zumindest zu wesentlichen Teilen mittels des Verfahrens gemäß einem der Ansprüche 1 bis 4 beseitigt werden können.

6. Druckregelvorrichtung nach Anspruch 5, **dadurch gekennzeichnet, daß** im elektronischen Regler ein integrierter elektronisch fehlerunkompensierter aktiver Schaltkreis (29) angeordnet ist, der die individuellen Signale aller Druckmeßwandler signaltechnisch aufbereitet und danach einem elektronischen Rechenwerk (37) zuleitet.

7. Druckregelvorrichtung nach Anspruch 5 oder 6, **dadurch gekennzeichnet, daß** die Gehäusekörper der Druckmeßwandler über Clinchverbindungen mit dem Ventilblock verbunden sind.

8. Druckregelvorrichtung nach mindestens einem der Ansprüche 5 bis 7, **dadurch gekennzeichnet, daß** die Gehäusekörper der Druckmeßwandler (16) über einen Befestigungsrahmen (19) mit Ventilblock (1) verbunden sind.

9. Druckregelvorrichtung mindestens einem der Ansprüche 5 bis 8, **dadurch gekennzeichnet, daß** mit dem Zusammenfügen von Ventilblock (1) und elektronischem Regler (2) mittels Kontaktfedern (24) eine galvanische Verbindung mit den elektrischen Zuleitungen des Meßwandlers hergestellt wird.

10. Druckregelvorrichtung nach Anspruch 9, **dadurch gekennzeichnet, daß** die elektrischen Zuleitungen des Meßwandlers (16) elektrisch mit metallischen oder metallisierten Kontaktflächen (26) lösbar in Kontakt stehen, welche isoliert zum Gehäusekörper des Meßwandlers ortsfest mit diesem verbunden sind.

## Claims

1. Method for error compensation, which is executed electronically in a pressure regulating device, error-corrected pressure characteristic values being calculated during a pressure measurement from the pressure characteristic values from the pressure sensors by means of a numerical allocation rule, two functionally independent correction values, which take into account the temperature dependence and influences of the signal conditioning channel (27, 28), being combined with each other during the calculation, **characterized in that** at least two physically separate correction value determinations (35, 36) are carried out at different manufacturing sites, wherein, during the first correction value determination (35), correction values for an individual pressure transducer (16) are determined and, in a further correction value determination (36), correction values for one or more signal conditioning channel/s (27, 28) are determined.

2. Method according to Claim 1, **characterized in that** the separately determined correction values are combined with each other in an electronic computing unit (37).

3. Method according to Claim 1 or 2, **characterized in that** the correction values which are obtained during a correction value determination are each stored in an independent data area or data medium.

4. Method according to at least one of Claims 1 to 3, **characterized in that** correction values about the set point deviations of the initial value are stored in a first error matrix (35) as a function of the brake pressure and the temperature prevailing at the time, and the correction values about the set point deviations of the initial value are stored in a further error matrix (36) as a function of the signal input voltage and the temperature prevailing at the time.

5. Electro-hydraulic pressure regulating device (30) having integrated pressure sensors (16) for detecting the pressure of a fluid in pressure lines (34), the device comprising a valve block (1) and an electronic controller (2) being joined together via a magnetic plug to form a compact, sealed structural unit with a cavity (10), multiple pressure transducers (16) being arranged in a cavity (10), each containing a pressure measuring diaphragm (32) and an electrically passive transducer (33), the valve block (1) comprising no device for signal pre-amplification, signal conditioning and error compensation of the electric converter signal, **characterized in that** in the electronic controller (2) there are calculating means, with which the errors of the measuring chain from each individual pressure channel during a pressure measurement can be eliminated, at least to a substantial extent, by means of electronic evaluation of two functionally separate correction value calculations or correction tables by means of the method according to one of Claims 1 to 4.

6. Pressure regulating device according to Claim 5, **characterized in that** an integrated electronically error-uncompensated active circuit (29) is arranged in the electronic controller, conditions the individual signals from all the pressure transducers in signal terms and after that, leads the said signals to an electronic computing unit (37).

7. Pressure regulating device according to Claim 5 or 6, **characterized in that** the housing bodies of the pressure transducers are connected to the valve block via clinch connections.

8. Pressure regulating device according to at least one of Claims 5 to 7, **characterized in that** the housing bodies of the pressure transducers (16) are connected to the valve block (1) via a securing frame (19).

9. Pressure regulating device according to at least one of Claims 5 to 8, **characterized in that** with the joining of valve block (1) and electronic controller (2), a galvanic connection to the electric feed lines of the transducer is produced by means of contact springs (24).

10. Pressure regulating device according to Claim 9, **characterized in that** the electric feed lines of the transducer (16) are detachably in contact electrically with metallic or metallised contact surfaces (26) which, insulated from the housing body of the transducer, are connected to the latter in a fixed manner.

## Revendications

1. Procédé de compensation des erreurs exécuté électroniquement dans un ensemble de régulation de pression, dans lequel lors d'une mesure de pression, des grandeurs caractéristiques de pression dont les erreurs sont corrigées sont calculées à partir des grandeurs caractéristiques de pression des capteurs de pression au moyen d'une prescription numérique d'attribution, deux valeurs de correction fonctionnellement indépendantes et tenant compte d'une dépendance vis-à-vis de la température et d'influences du canal (27, 28) de préparation du signal étant associées l'une à l'autre lors du calcul,
**caractérisé en ce que**
au moins deux déterminations (35, 36) de valeurs de correction, spatialement séparées l'une de l'autre, sont exécutées en des sites de fabrication différents,
**en ce que** des valeurs de correction d'un convertisseur individuel (16) de mesure de pression sont déterminées pendant la première détermination (35) de valeurs de correction et
**en ce que** des valeurs de correction d'un ou plusieurs canaux (27, 28) de préparation de signal sont déterminées dans une autre détermination (36) de valeurs de correction.

2. Procédé selon la revendication 1, **caractérisé en ce que** les valeurs de correction déterminées séparément sont associées mutuellement dans une unité électronique de calcul (37).

3. Procédé selon les revendications 1 ou 2, **caractérisé en ce que** chacune des valeurs de correction obtenues lors d'une détermination des valeurs de correction est conservée dans une zone de données ou un support de données autonomes.

4. Procédé selon au moins l'une des revendications 1 à 3, **caractérisé en ce que** des valeurs de correction sont conservées dans une première matrice d'erreurs (35) par l'intermédiaire des écarts de valeur de consigne de la valeur de sortie en fonction de la pression de freinage et de la température qui règne à ce moment et **en ce que** les valeurs de correction sont conservées dans une autre matrice d'erreurs (36) par l'intermédiaire des écarts de valeur de consigne de la valeur de sortie en fonction de la tension d'entrée du signal et de la température qui règne à ce moment.

5. Ensemble électrohydraulique (30) de régulation de pression présentant des capteurs de pression (16) intégrés pour la détermination de la pression d'un fluide dans des conduits sous pression (34), l'ensemble étant constitué d'un bloc de vanne (1) et d'un régulateur électronique (2) assemblés par l'intermédiaire d'une fiche magnétique en une unité structurelle compacte et étanche qui présente une cavité (10), plusieurs convertisseurs (16) de mesure de pression étant disposés dans une cavité (10) et contenant chacun une membrane (32) de mesure de pression et un convertisseur électrique passif de mesure (33), le bloc de vanne (1) ne comprenant aucun dispositif pré-amplification du signal, de préparation du signal ou de compensation des erreurs du signal électrique de convertisseur,
**caractérisé en ce que**
des moyens de calcul par lesquels les erreurs de la chaîne de mesure de chaque canal de pression individuel peuvent être éliminées lors d'une mesure de pression par évaluation électronique de deux calculs de grandeurs de correction tableaux de correction fonctionnellement séparés ou, au moins pour leur partie essentielle, au moyen du procédé selon l'une des revendications 1 à 4, sont prévus dans le régulateur électronique (2).

6. Ensemble de régulation de pression selon la revendication 5, **caractérisé en ce que** dans le régulateur électronique est disposé un circuit intégré (29) actif dans une compensation électronique des erreurs, qui traite les signaux individuels de tous les convertisseurs de mesure de pression et les conduit ensuite au calculateur électronique (37).

7. Ensemble de régulation de pression selon les revendications 5 ou 6, **caractérisé en ce que** les corps des boîtiers des convertisseurs de mesure de pression sont reliés au bloc de soupape par des liaisons dites clinch.

8. Ensemble de régulation de pression selon au moins l'une des revendications 5 à 7, **caractérisé en ce que** les corps des boîtiers des convertisseurs (16) de mesure de pression sont reliés au bloc de vanne (1) par l'intermédiaire d'un bâti de fixation (19).

9. Ensemble de régulation de pression selon au moins l'une des revendications 5 à 8, **caractérisé en ce qu'**une liaison galvanique avec les conducteurs électriques du convertisseur de mesure est établie au moyen d'un ressort de contact (24) lors de l'assemblage du bloc de vanne (1) et du régulateur électronique (2).

10. Ensemble de régulation de pression selon la revendication 9, **caractérisé en ce que** les conducteurs électriques du convertisseur de mesure (16) sont en contact électrique libérable avec des surfaces de contact (26) métalliques ou métalisées et sont reliés fixement à ce dernier de manière isolée par rapport au corps de boîtier du convertisseur de mesure.
